# EUROPEAN PATENT APPLICATION

(11) **EP 4 617 241 A1**
(43) Date of publication of application: **17.09.2025**
(21) Application number: 25160675.2
(22) Date of filing: 27.02.2025
(51) Int. Cl.: C03B 27/04, C03B 29/08

(54) **GLASS TEMPERING PROCESS, IN PARTICULAR FOR LOW-EMISSION GLASSES**

(30) Priority: 15.03.2024 IT 202400005794
(71) Applicant: Mazzaroppi Engineering S.r.l., 00134 Roma (IT)
(72) Inventor: MAZZAROPPI, Antonio, I-00134 Roma (IT)
(74) Representative: Perronace, Andrea

(57) **Abstract**

The present invention relates to a method for tempering glass panes (20), with the following steps:
A. acquiring an image of a glass pane (20) conveyed on conveyor rollers (30);
B. acquiring a distribution map of heat absorption coefficient in said glass pane (20) conveyed on conveyor rollers (30);
C. recognizing, by means of an electronic processing unit, the geometric shape and the overall dimensions of the glass pane (20) based on the image of step A;
D. recognizing, by means of the electronic processing unit, based on the map of step B, the position of one or more parts (21, 22, 23) with respective heat absorption coefficient within the geometric shape of step C;
E. conveying the glass pane (20) on said conveyor rollers (30) into a tempering furnace (100) provided with an array of resistances (50) and an array of blowing nozzles (40) ;
F. determining, by means of an electronic processing unit, the position of said glass pane (20) and of said one or more parts (21, 22, 23) with a different heat absorption coefficient, inside the tempering furnace;
G. individually activating the resistances (51, 52) of said array of resistances (50) and the nozzles (41, 42) of said array of nozzles (40) as a function of their proximity to said one or more parts (21, 22, 23), and in inversely proportional manner to the respective heat absorption coefficient.

The invention also relates to a furnace configured to perform the method of the invention.

## Description

The present invention relates to a method for tempering glass panes, in particular low-emissivity glass panes.

### Background art

Both regular glass panes and low-emissivity glass panes have generic shapes and screen-printed zones. The latter, being black, better absorbs the heat provided with respect to the zones not screen-printed, thereby causing a non-homogeneous heating of the glass sheet and accordingly, a deformation of the same and non-optimal qualities.

Therefore, the need remains to provide a method and an apparatus for homogeneously heating glass panes having screen-printed zones, or generally zones with different heat absorption.

### Purpose and object of the invention

It is the object of the present invention to provide a method and an apparatus which solve the problems and overcome the drawbacks of the prior art.

The present invention relates to a method and an apparatus according to the appended claims.

### Detailed description of embodiments of the invention

### List of drawings

The invention will now be described by way of a nonlimiting illustration, with particular reference to the figures in the accompanying drawings, in which:
- Figure 1 shows, in (a), a side sectional view of the inside of a tempering furnace with conveyor rollers and a glass pane conveyed thereby and subjected to video detection; in (b), the same apparatus in plan; and in (c), the glass pane alone on the rollers; and
- Figure 2 shows in (a) a side sectional view of a tempering furnace; in (b), the same apparatus in plan; in (b1), a detail of the edge zone of the glass pane in the tempering furnace and in (b2) a further detail of a different edge of the glass pane in the tempering furnace.

It is here specified that elements of different embodiments can be combined to provide further embodiments, without restrictions, by respecting the technical concept of the invention, as those skilled in the art will effortlessly understand from the description.

The present description also makes reference to the prior art for the implementation thereof in relation to the detail features not described, such as elements of minor importance usually used in the prior art in solutions of the same type, for example.

When an element is introduced, it is always understood that there can be "at least one" or "one or more".

When a list of elements or features is given in this description, it is understood that the finding according to the invention "comprises" or alternatively "consists of" such elements.

When listing features within the same sentence or bullet list, one or more of the individual features can be included in the invention without connection to the other features on the list.

Two or more of the parts (elements, devices, systems) described below can be freely associated and considered as part kits according to the invention.

### Embodiments

In order to obviate the problem of the non-uniform heating of a glass pane which has zones with a different heat absorption coefficient, the present invention aims to provide heat to the various zones of the glass pane in a differentiated manner.

Such zones can be provided with more or less heat, both by radiation and forced convection.

Preferably, this is implemented by individually turning OFF or ON the heat sources in the furnace. However, it is also possible to activate them partially (to a heating value predetermined each time), should such sources allow it.

Preferably, the individual heat sources are more intense than in conventional tempering furnaces so as to better follow the outlines of the glass pane.

These activations are managed by an electronic unit which monitors the passage of the glass pane in the furnace on classic conveyor rollers.

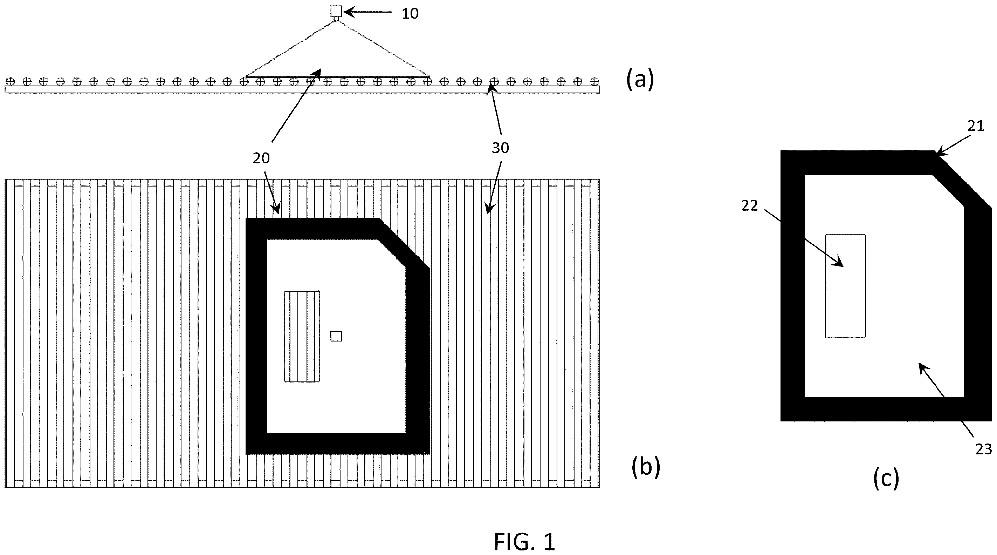

Referring to Fig. 1 (a) and (b), the glass pane 20 moves on the conveyor rollers 30 and stops before entering the furnace (and therefore, prior to the heating) to be visually acquired by a camera or vision system 10. Thereby, the apparatus according to the invention can be adapted to any shape and dimensions of the glass pane to be tempered (as well as the presence of any windows in the sheet and any other differentiating geometric element in terms of heat absorption).

Again, there is acquired, before entering the furnace, a distribution map of heat absorption coefficient in said glass pane conveyed on conveyor rollers. Based on such a map, there are determined the dimensions, shape and position of zones (or "parts") with a different (respective) absorption coefficient within the already determined geometric shape of the glass pane, dimension and position of screen-printed zones, for example.

The shape and overall dimension acquisition system and the absorption coefficient map acquisition system can be the same system or different systems. Preferably, such systems are different and the absorption coefficient map acquisition system is not used to determine the geometry and the overall dimensions of the glass pane.

Since the position of the glass pane in the furnace is known at every instant because the rollers are operated electronically, it is possible to always know where the glass pane is, instant by instant, and therefore also where its parts with different absorption are. Indeed, the acquisition of the image of the glass pane from the top then allows processing the image and identifying, automatically or by an operator, which zones have differentiated absorption, to then be able to follow them inside the furnace.

For clarity, and by way of example, Fig. 1 (c) shows three zones in the exemplary glass pane: the zone of a screen-printed edge 21, the zone of a window 22 and the rest of the glass pane 23.

The part not screen-printed (but this is valid for all parts which absorb less) can be provided with more heat both by radiation and by forced convection by directing toward it hot jets of air which, for obvious reasons, are not to also involve the screen-printed zones, also activating more or less the electric resistances at these zones.

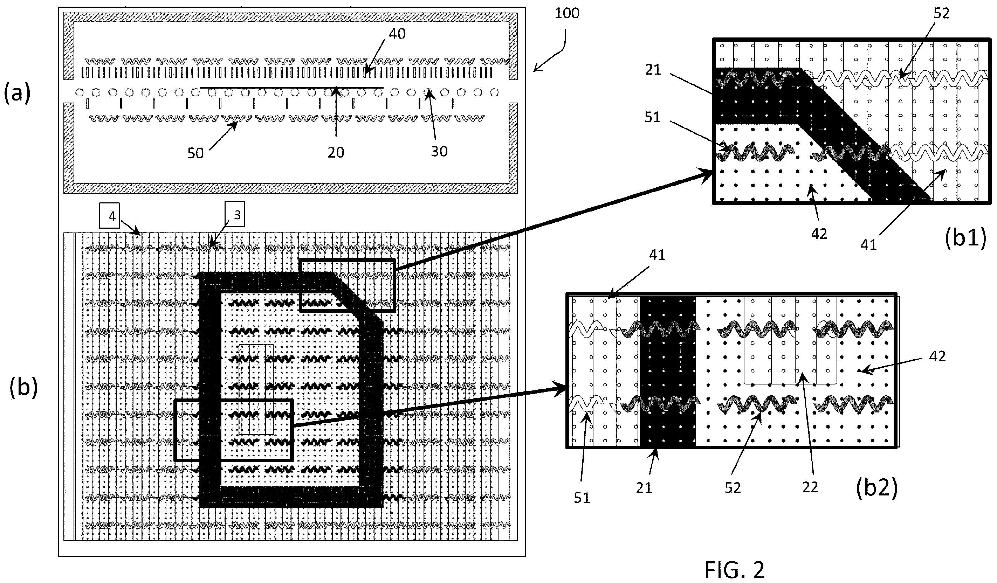

Referring also to Fig. 2 (a), in addition to the rollers 30, an array of (preferably infrared) resistances 50 and an array of nozzles 40 are arranged in furnace 100.

Fig. 2 (b) shows, in plan, the glass pane 20 with the resistances and nozzles (at times they appear as balls) superimposed. Generally, the resistances 52 or the black solid balls 42 are activated, while the resistances 51 and the white empty balls 41 are deactivated. However, it is also possible to adjust the resistances with an intermediate activation, and the same is valid for the nozzles. Hereinafter reference is only made to the case of complete activation/deactivation for descriptive simplicity.

According to the invention, as shown in the details of Fig. 2 (b1) and (b2), the hot air is blown by the individual nozzles activated at the zones of the glass pane not screen-printed, while they are not activated outside these zones.

The same concept applies to the window of the glass pane, even if this is not shown in the figures.

The nozzles and/or the resistances are activated or deactivated in proportion to the zone type which progressively falls within a considered zone.

The system according to the invention is particularly advantageous in the case of automobile glass panes, or low-emissivity glass panes, because they do not have screen-printed zones (edges).

Preferred embodiments have been described above and variations of the present invention have been suggested, but it should be understood that those skilled in the art may make modifications and changes without departing from the related scope of protection, as defined by the appended claims.

## Claims

1. A method for tempering glass panes (20), comprising performing the following steps:
A. acquiring an image of a glass pane (20) conveyed on conveyor rollers (30);
B. acquiring a distribution map of heat absorption coefficient in said glass pane (20) conveyed on conveyor rollers (30);
C. recognizing, by means of an electronic processing unit, the geometric shape and the overall dimensions of the glass pane (20) based on the image of step A;
D. recognizing, by means of the electronic processing unit, based on the map of step B, the position of one or more parts (21, 22, 23) with respective heat absorption coefficient within the geometric shape of step C;
E. conveying the glass pane (20) on said conveyor rollers (30) into a tempering furnace (100) provided with an array of resistances (50) and an array of blowing nozzles (40);
F. determining, by means of an electronic processing unit, the position of said glass pane (20) and of said one or more parts (21, 22, 23) with a different heat absorption coefficient, inside the tempering furnace;
G. individually activating the resistances (51, 52) of said array of resistances (50) and the nozzles (41, 42) of said array of nozzles (40) as a function of their proximity to said one or more parts (21, 22, 23), and in inversely proportional manner to the respective heat absorption coefficient.

2. Method according to claim 1, wherein the map of step B is not used in step C.

3. Method according to claim 1 or 2, wherein said glass pane is a low-emissivity glass pane.

4. Method according to one of claims 1 to 3, wherein said glass pane is a glass pane with a screen-printed edge.

5. A furnace for tempering glass panes, comprising:
- a system (10) for acquiring images, configured to acquire an image of a glass pane (20) conveyed on conveyor rollers;
- a system for acquiring a map of absorption coefficient of said glass pane (20) conveyed on conveyor rollers;
- a first electronic unit configured to recognize, in said image, the geometric shape and the dimensions of the glass pane (20) based on the output of the image acquisition system (10), as well as configured to recognize shape and dimensions of one or more parts (21, 22, 23) with respective heat absorption coefficient within said image based on the output of the system for acquiring an absorption coefficient map and on said geometric shape and dimensions of the glass pane;
- an array of resistances (50) and an array of blowing nozzles (40) inside the furnace;
- a second electronic processing unit configured to determine the instantaneous position of said glass pane (20) and said parts (21, 22, 23) with a different heat absorption coefficient inside the furnace (100);
- a third electronic processing unit configured to individually activate the resistances (51, 52) of said array of resistances (50) and the nozzles (41, 42) of said array of nozzles (40) as a function of their proximity to said one or more parts (21, 22, 23), and in an inversely proportional manner to the respective heat absorption coefficient.

6. Tempering furnace according to claim 5, wherein the first electronic unit is not configured to use the heat absorption coefficient distribution map to determine the geometric shape and the dimensions of said glass pane (20).

7. Furnace according to claim 5 or 6, wherein said second and said third electronic processing units are a single electronic processing unit.

8. Furnace according to one of claims 5 or 7, wherein said second and said third electronic processing units are configured to temper a low-emissivity glass pane.

9. Furnace according to one of claims 5 to 8, wherein said second and said third electronic processing units are configured to temper a glass pane with a screen-printed edge.
